**Europäisches Patentamt**

**European Patent Office**

**Office européen des brevets**

(19)

(11) Veröffentlichungsnummer: **0 017 179**
**B1**

(12)

# EUROPÄISCHE PATENTSCHRIFT

(45) Veröffentlichungstag der Patentschrift:
26.05.82

(51) Int. Cl.³: **B 26 F 1/44**

(21) Anmeldenummer: **80101649.4**

(22) Anmeldetag: **27.03.80**

(54) **Verfahren und Mittel (Kunststoffplatte) zum Zurichten von Flachform-Bandstahl-Stanzschnitten.**

(30) Priorität: **02.04.79 DE 2913178**

(43) Veröffentlichungstag der Anmeldung:
**15.10.80 Patentblatt 80/21**

(45) Bekanntmachung des Hinweises auf die Patenterteilung:
**26.05.82 Patentblatt 82/21**

(84) Benannte Vertragsstaaten:
**DE FR GB IT NL SE**

(56) Entgegenhaltungen:
**DE-B-1 111 026**
**FR-A-1 420 429**
**US-A-3 835 746**
**US-A-3 969 474**

(73) Patentinhaber: **BASF Aktiengesellschaft,
Carl-Bosch-Strasse 38, D-6700 Ludwigshafen (DE)**

(72) Erfinder: **Mohr, Heinz, Dr.-von-Hoermann-Strasse 1,
D-6720 Speyer (DE)**
Erfinder: **Hoffmann, Walter, Moerscher Strasse 128,
D-6710 Frankenthal (DE)**
Erfinder: **Vyvial, Rudolf, Alwin-Mittasch-Platz 11,
D-6700 Ludwigshafen (DE)**

## Verfahren und Mittel (Kunststoffplatte) zum Zurichten von Flachform-Bandstahl-Stanzschnitten

Die Erfindung betrifft Verfahren zum Stanzen von Folien aus Karton, Papier und weichen Metallen nach vorgegebenen geometrischen Figuren, insbesondere zur Herstellung von Faltschachteln und ähnlichen kubischen Gefässen für vorzugsweise automatisierte Verpackungsstrassen sowie Massnahmen und Mittel zum Justieren der Bandstahlmesser zur Erzeugung exakt masshaltiger Trennlinien und faserfreier Schneidkanten.

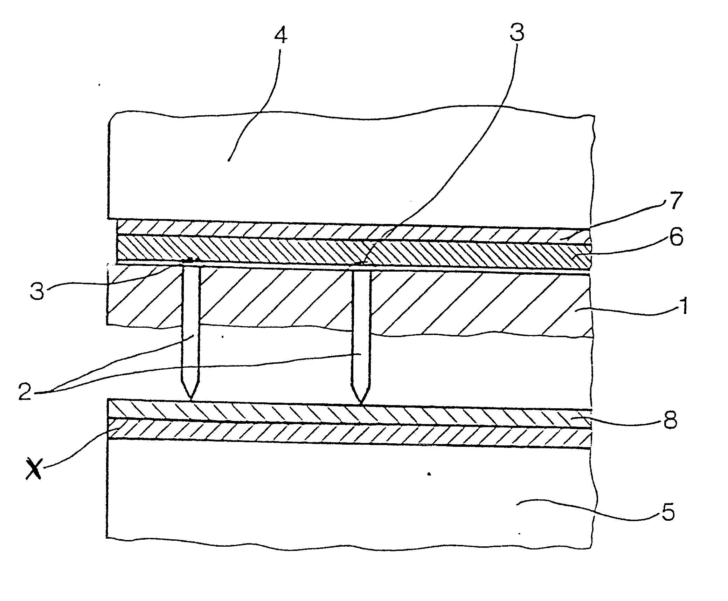

Es ist bereits bekannt, für Nut- und Stanzformen in Flachform-Stanzautomaten statt einer im Karton oder Kunststoff-Folie geschnittenen oder gefrästen Gegenzurichtung eine auf dem rationelleren Weg über eine Filmmontage erhaltene Zurichtung aus photopolymeren Folienschichten einzusetzen. Die sogenannte Gegenzurichtung ist hierbei eine bei der Herstellung von Stanzprägungen und -schnitten unmittelbar mitwirkende Platte, in der Zeichnung mit «X» bezeichnet, – in die ein System von Rillen oder Nuten eingearbeitet ist, das z.B. der Geometrie der Faltkanten einer Faltschachtel entspricht. Das streng geometrische Relief als Rillen- bzw. Nutsystem wird jedoch nicht nach konventionellen, meist spanabhebenden Verfahren hergestellt, sondern nach dem bekannten Verfahren zur Herstellung von Hochdruckplatten durch Photopolymerisation. Solche als Gegenzurichtung verwendete, durch Photopolymerisation gehärtete Platten sind für diesen Einsatz auf ein Edelstahlblech aufgezogen.

Zur Herstellung von Nut- und Stanzschnitten für Faltschachteln und ähnliche geometrische Zuschnitte werden indes auch Zurichtungen anderer Art benötigt, um z.B. die Masstoleranzen der Bandstahlmesser in der Stanz- bzw. Schneidrichtung sowie von unterschiedlichen Kraftflüssen des Stanzdrucks in der Ebene auszugleichen, die sich z.B. aus einer geometrisch ungleichmässigen Verteilung der Stanz- und Schnittlinien über die gesamte Fläche hinweg vergeben. Solche Zurichtungen werden in Verbindung mit mehrfachem probeweisem Aufbringen des Stanzdrucks der fest in eine Platte eingefügten Bandstahlmesser als dünne gummierte Streifen auf die Rückseite der Messerplatte, d.h. auf die Fussseite der Messer aufgeklebt. Beim mehrmaligen testweisen Aufbringen des Stanzdrucks auf den zuzurichtenden Bandstahlschnitt muss jeweils auch eine Nutzenplatte beigelegt werden, die dann für weitere Verarbeitung nicht mehr brauchbar ist. – Dieser Zurichtevorgang mit geklebtem Zurichtestreifen ist ausserordentlich arbeits- und kostenintensiv. Andererseits können bisher auf andere Weise exakte Präge- und Trennlinien und faserfreie Schneidkanten an den Nutzen nicht erhalten werden. Ein ähnliches Verfahren ist beispielsweise bekannt aus der DE-B-1 111 926.

Es wurde nun gefunden, dass man das Zurichten der Bandstahl-Stanzschnitte, d.h. das Ausgleichen von Fehltoleranzen auf der Rückseite der Bandstahlmesserplatte wesentlich beschleunigen, vereinfachen und verbilligen kann, wenn erfindungsgemäss eine der gesamten Nutzenfläche entsprechende, mit einem masshaltigen Träger verbundene Platte aus fliessfähigen Kunststoffen oder entsprechenden Kunststoffvorprodukten, die bei Temperaturen unter 100 °C zu harten vernetzten Kunststoffen aushärtbar sind, mit vorgewählter Plattenstärke auf die Rückseite der Bandstahlmesserplatte aufgelegt, dann Ober- und Untertisch der Stanze bzw. Presse mit zwischengelegter Bandstahlmesserplatte zugefahren, wieder geöffnet und sodann die Platte mit dem darauf bzw. darin gebildeten Relief durch Nachbehandeln verfestigt wird.

– Zur Begrenzung des Fliessverhaltens der Kunststoffplatte beim Zufahren der Stanze zur Bildung des die Toleranzen ausgleichenden Reliefs wird insbesondere eine auf eine Metallunterlage kaschierte Kunststoffplatte von vorbestimmter Härte in noch fliessfähigem Zustand verwendet. –

Die mit einem masshaltigen Träger, insbesondere Stahl- oder Aluminiumblechen verbundenen Platten bestehen aus bei Raumtemperatur festen oder wachsartig festen, jedoch fliessfähigen Kunststoffen oder Kunststoffvorprodukten, die bei Temperaturen unter 100 °C, insbesondere 10 bis 50 °C, zu harten, vernetzten Kunststoffen ausgehärtet werden können. Die nicht gehärteten Platten bzw. Schichten sollen bevorzugt bei Raumtemperatur durch Prägen irreversibel bzw. weitgehend irreversibel verformbar sein und die die Reliefprägung aufweisenden Schichten ohne merkliche oder wesentliche Änderung der Reliefform zu harten vernetzbaren Stoffen ausgehärtet werden können, die insbesondere einen Elastizitätsmodul von mindestens 100 000 kp/cm² (im allgemeinen 100 000 bis 300 000 kp/cm²) und bevorzugt mindestens 150 000 kp/cm² aufweisen.

Als Kunststoffe und Kunststoffvorprodukte sind die bekannten Polymeren, Monomeren, Oligomeren, ggf. unter Zusatz von vernetzenden Substanzen geeignet, die von Harzen, vernetzten Polymerisaten, Polykondensaten und Polyaddaten führen, wie sie in ihrer Art in Houben-Weyl, Methoden der organischen Chemie, Stuttgart 1963, Band 14/2 beschrieben und vom Fachmann in geeigneter Form ausgewählt werden können. Genannt seien ungesättigte Polyesterharze, Polyester, Polyurethanbildner, vernetzbare Polyamide bzw. Polyamidgemische, härtbare Epoxyharze, Melamin- oder Phenolharze, soweit sie in nicht ausgehärtetem Zustand die hinreichende Fliessfähigkeit aufweisen, dass ihnen das gewünschte Relief eingeprägt werden kann und sie die Relief-Form weitgehend massgenau behalten, wenn sie dann zu harten vernetzten Kunststoffen gehärtet werden. Es ist selbstverständlich, dass die Schichten zusätzlich von den Kunststoffen bzw. Kunststoffbildnern die üblichen Zusätze wie Feststoffe, Pigmente, Initiatoren, Härter, Inhibitoren und/oder Weichmacher enthalten können, soweit hierdurch nicht die Fliessfähigkeit, Formstabilität oder Härte in ungeeigneter Weise für das erfindungsgemässe Verfahren beeinflusst werden.

Für geeignet haben sich für das erfindungsgemässe Verfahren zum Zurichten insbesondere Plattenmaterialien erwiesen, die durch Einwirkung energiereicher Strahlung unter Vernetzung gehärtet oder photopolymerisiert werden können. Besonders genannt seien photovernetzbare Kunststoffe und/oder photopolymerisierbare olefinisch ungesättigte Verbindungen, wie die bekannten photopolymerisierbaren Mischungen und Aufzeichnungsmassen, die für die Herstellung von Kunststoffdruckplatten und Relief-Formen benutzt werden, soweit sie die oben geforderten Eigenschaften bezüglich Fliessfähigkeit, Verformung, Härung und Härte der vernetzten Produkte aufweisen. Solche Massen und ihre Vernetzung sind z.B. in der DE-A-2 040 390, FR-A-15 20 856, DE-A-21 14 767 beschrieben. Bewährt haben sich besonders photopolymerisierbare Gemische auf der Basis von wasserlöslichen Vinylalkohol-Polymeren oder deren Umsetzungsprodukte, z.B. mit 1.2-Alkylinoxiden, wie Äthylenoxid und photopolymerisierbaren Monomeren wie (Meth)-acrylate, z.B. Hydroxyäthylacrylat oder -methacrylat oder Poly(meth)acrylate von Polyolen wie Trioder Tetraäthylenglykol-di(meth)acrylate.

In der Zeichnung ist die Zurichtung einer Bandstahl-Messerplatte nach dem erfindungsgemässen Verfahren mittels einer fliessfähigen, zur Reliefbildung geeigneten Kunststoffplatte zusammen mit dem Ober- und Untertisch einer Stanze bzw. Presse veranschaulicht. – Die vorzugsweise aus Schichtholz hergestellte Bandstahl-Messerplatte ist mit 1 bezeichnet, in die die zum Schneiden, Perforieren oder Prägen einzusetzenden Messer 2 in bekannter Weise fest eingefügt sind. Die Messerfüsse 3 sollten im idealen Fall bündig in der Ebene der Messerplatte liegen. – Nach einer Normung beträgt die Höhe der Bandstahlmesser z.B. 23,8 mm und – bedingt durch Herstellungsmethoden und Schärfen bzw. Formgebung der Schneiden – ergeben sich Fehltoleranzen von etwa 23,8 bis 23,78 mm, d.h. von etwa 20 µm. Diese Fehltoleranzen wurden bisher durch auf die Rückseite der Bandstahl-Messerplatte aufzuklebende Papierstreifen nach und nach ausgeglichen. Man verfuhr dabei so, dass der Obertisch 4 mehrere Male mit zwischengelegter Bandstahl-Messerplatte gegen den Untertisch 5 der Stanze gefahren wurde und der richtige Schnitt bzw. die richtige Prägung an einem probeweise eingefügten Nutzen geprüft wurde. Gegebenenfalls musste das streifenweise Nachkleben zum Ausgleichen der Toleranzen vielemale wiederholt werden.

Nach der Erfindung wird nunmehr eine dünne fliessfähige Kunststoffplatte 6, die auf eine feste metallische Unterlage 7 kaschiert ist, auf die Rückseite der Bandstahl-Messerplatte 1 aufgelegt und zum Ausgleich der Fehltoleranzen wiederum der Obertisch 4 gegen unter Untertisch 5 der Stanze gefahren. Hierbei bildet sich in der fliessfähigen Schicht der Platte 6 ein den Fehltoleranzen entsprechendes Relief, insbesondere im Bereich der Messerfüsse 3. – Nach nur einmaligem Zufahren des Stanztisches mit dem zwischengelegten Platten 1 und 6 mit 7 wird die zunächst fliessfähige Schicht der Zurichteplatte 6, wie oben beschrieben ausgehärtet und gewährleistet auf diese Weise bei wesentlich verkürzter Zurichtezeit einen vollkommenen Ausgleich der Fehltoleranzen an den Bandstahlmessern 2. Mit 8 ist der vor den Messern 2 liegende Vielfachnutzen bezeichnet, der durch Schneid-, Perforier- und Prägevorgänge in eine Vielzahl von Faltschachtelschnitten zu trennen ist.

Beispiel

Eine Trägerplatte aus Stahl von 0,2 mm Dicke wurde mit einer Lösung aus 100 Teilen eines teilverseiften Polyvinylacetats (Verseifungsgrad 82 Mol-%; mittlerer Polymerisationsgrad 500), 100 Teilen einer oxäthylierten, teilverseiften Polyvinylacetats (Molgewicht 30 bis 35 000; Gehalt von Äthylenoxid-Einheite 24%), 150 Teilen Hydroxypropylacrylates, 5 Teilen Benzoinisopropyläthers in 200 Teilen Wasser, beschichtet.

Nach 16 Stunden Trocknung bei Raumtemperatur wurde eine Verbundplatte erhalten, deren Gesamtdicke 0,31 mm betrug. Ihre Kunststoffschicht hat im unbelichteten Zustand einen Elastizitätsmodul von 2 bis 5000 kp/cm$^2$ und lässt sich leicht im Rohzustand plastisch irreversibel verformen. Durch die Aushärtung in einem Leuchtstoffröhrenbelichter steigt der Elastizitätsmodul auf 160 000 kp/cm$^2$ an, wodurch den auftretenden Belastungen am Messer während des Stanzvorganges genügend Widerstand geleistet wird.

Mit solchen Platten konnte beim Stanzen von Pappkarton ohne manuelle Zurichtung 150 000 einwandfrei geschnittene Schachtelrohlinge hergestellt werden, ohne Beschädigung der Stanzmesser.

**Patentansprüche**

1. Verfahren zum Zurichten von Flachform-Bandstahl-Stanzschnitten vor der Herstellung von flächenhaften geometrischen Schnittfiguren, z.B. für Faltschachteln und ähnliche kubische Gefässe aus Papier, Karton und weichen Metallen, vorzugsweise über Vielfachnutzen, wobei abweichende Toleranzen der Bandstahlmesser (2) in Stanz- und Schneidrichtung und unterschiedliche Kraftflüsse des Stanzdrucks in der mit den Bandstahlmessern bestückten Platte (1) durch dünne flächenhafte Beilagen auszugleichen sind, dadurch gekennzeichnet, dass eine der gesamten Nutzenfläche entsprechende, mit einem masshaltigen Träger (7) verbundene Platte (6) aus fliessfähigen Kunststoffen oder entsprechenden Kunststoffvorprodukten, die bei Temperaturen unter 100 °C zu harten vernetzten Kunststoffen aushärtbar sind, mit vorgewählter Plattenstärke auf die Rückseite der Bandstahlmesserplatte (1) aufgelegt, dann Ober- und Untertisch (4,5) der Stanze bzw. Presse mit zwischengelagerter Bandstahlmesserplatte (1) zugefahren, wieder geöffnet und sodann die Platte (6) mit dem darauf bzw. darin gebildeten Relief durch Nachbehandeln verfestigt wird.

2. Verfahren nach Anspruch 1, dadurch gekennzeichnet, dass die Prägezeit des Reliefs in der fliessfähigen Kunststoffplatte (6) in Abhängigkeit von ihrer Stärke und dem Schliessdruck der Stanztische (4,5) vorbestimmt wird.

3. Verfahren nach Anspruch 1 und 2, gekennzeichnet durch die Verwendung einer auf eine Metallunterlage (7) kaschierten Kunststoffplatte (6) einer Stärke von 60 bis 300 μm in noch fliessfähigem Zustand, die beim Bilden des Reliefs mit Drücken von 40 bis 120 kp/cm² belastet und den Toleranzen entsprechend plastisch verformt wird.

4. Verfahren nach einem der Ansprüche 1 bis 3, dadurch gekennzeichnet, dass eine Platte (6) verwendet wird, die bei Raumtemperatur durch Prägen weitgehend irreversibel verformbar ist.

5. Verfahren nach einem der Ansprüche 1 bis 4, dadurch gekennzeichnet, dass das die Reliefprägung aufweisende Plattenmaterial (6) ohne wesentliche Änderung der Relief-Form bei Temperaturen unter 100 °C zu einem harten vernetzten Kunststoff mit einem Elastizitätsmodul von mindestens 100 000 kp/cm² ausgehärtet wird.

6. Verfahren nach einem der Ansprüche 1 bis 5, dadurch gekennzeichnet, dass das Plattenmaterial (6) durch Einwirkung energiereicher Strahlung gehärtet wird.

7. Verfahren nach einem der Ansprüche 1 bis 6, dadurch gekennzeichnet, dass die mit einem masshaltigen Träger (7) verbundene Platte (6) einen photovernetzbaren Kunststoff und/oder photopolymerisierbare olefinisch ungesättigte Verbindungen enthält.

**Revendications**

1. Procédé d'ajustement d'outils à découper à plat en bande d'acier avant la réalisation de figures géométriques découpées à plat, par exemple pour boîtes pliantes et récipients cubiques analogues en papier, carton ou métaux tendres, de préférence sur des flans multiples, les écarts dimensionnels des couteaux en bande d'acier (2) dans la direction d'estampage et de coupe et les flux de forces différents de la pression de découpage dans la plaque (1) garnie des couteaux en bande d'acier étant compensés par de minces cales plates, caractérisé par le fait qu'on met au dos de la plaque porte-couteaux (1) une plaque (6) d'épaisseur déterminée, en matières plastiques de bonne plasticité ou en avant-produits correspondants, durcissables au-dessous de 100 °C pour former des matières plastiques réticulées dures, unie à un support (7) de dimensions précises et correspondant à toute la surface des flans, puis on ferme le plateau supérieur (4) et le plateau inférieur (5) de la presse avec la plaque porte-couteau (1) intercalée, et on rouvre puis on durcit la plaque (6), le relief étant formé dessus, par un traitement approprié.

2. Procédé selon la revendication 1, caractérisé par le fait que la durée de formage du relief dans la plaque plastique (6) est fixée en fonction de l'épaisseur de cette plaque et de la pression de fermeture des plateaux (4, 5) de la presse.

3. Procédé selon l'une des revendications 1 et 2, caractérisé par l'utilisation d'une plaque en matière plastique (6) appliquée sur un support métallique (7) et ayant une épaisseur de 60 à 300 μm à l'état encore plastique, laquelle plaque, pour la formation du relief, est soumise à des pressions de 40 à 120 kgf/cm² et se déforme plastiquement en fonction des écarts dimensionnels.

4. Procédé selon l'une des revendications 1 à 3, caractérisé par le fait qu'est utilisée une plaque (6) déformable à la température ambiante par estampage de façon à peu près irréversible.

5. Procédé selon l'une des revendications 1 à 4, caractérisé par le fait que la matière de la plaque (6) présentant l'empreinte en relief est durcie à une température inférieure à 100 °C sans changement appréciable de la forme du relief pour l'obtention d'une matière plastique réticulée dure ayant un module d'élasticité d'au moins 100 000 kgf/cm².

6. Procédé selon l'une des revendications 1 à 5, caractérisé par le fait que la matière de la plaque (6) est durcie par l'action d'un rayonnement à haute énergie.

7. Procédé selon l'une des revendications 1 à 6, caractérisé par le fait que la plaque (6), unie à un support (7) de dimensions précises, contient une matière plastique photoréticulable et/ou des composés oléfiniquement insaturés photopolymérisables.

**Claims**

1. A process for underlaying flat-bed steel rule dies prior to the production of sheet-like geometrical cut blanks, for example for folding boxes and similar cuboid containers consisting of paper, cardboard or soft metals, preferably where multiblank sheets are concerned, the varying tolerances of the steel-rule cutters (2) in the punching and cutting direction and the different force fluxes of the punching pressure in the plate (1) fitted with the steel rule cutters requiring compensation by thin sheet-like shims, characterized in that a sheet (6), bonded to a dimensionally stable base (7), of a flowable plastic or corresponding plastic intermediate, which can be hardened at below 100 °C to give a hard corsslinked plastic, the sheet having a preselected thickness and corresponding in size to the total area of the sheet from which the blanks are to be cut, is applied to the back of the steel rule cutter plate (1), the upper and lower platens (4, 5) of the punch or press are then moved together, with the steel rule cutter plate (1) between them, and are opened again, and the plate (6), bearing the relief formed thereon or therein, is then solidified by an after-treatment.

2. A process as claimed in claim 1, characterized in that the time required for embossing the relief in the flowable plastic sheet (6) depends on the thickness of the sheet and on the closing pressure of the platens (4, 5).

3. A process as claimed in claims 1 and 2, characterized by the use of a sheet (6), from 60 to 300 μm thick, of a flowable plastic, laminated onto a metal base (7), this sheet being subjected to pressures of from 40 to 120 kp/cm² to form the relief and thereby undergoing plastic deformation corresponding to the tolerances.

4. A process as claimed in any of claims 1 to 3, characterized in that a sheet (6) which is substantially irreversibly deformable by embossing at room temperature is used.

5. A process as claimed in any of claims 1 to 4, characterized in that the sheet material (6) bearing the embossed relief is hardened, without substantial change of the shape of the relief, at below 100 °C to give a hard corsslinked plastic having a modulus of elasticity of not less than 100 000 kp/cm².

6. A process as claimed in any of claims 1 to 5, characterized in that the sheet material (6) is hardened by exposure to high-energy radiation.

7. A process as claimed in any of claims 1 to 6, characterized in that the sheet (6), bonded to a dimensionally stable base (7), contains a photocrosslinkable plastic and/or photopolymerizable olefinically unsaturated compounds.

1/1